# EUROPEAN PATENT APPLICATION

(11) **EP 4 375 909 A1**
(43) Date of publication of application: **29.05.2024**
(21) Application number: 22846070.5
(22) Date of filing: 28.06.2022
(51) Int. Cl.: G06Q 30/00, G06Q 10/08, H04W 4/02, G06K 7/14, G06Q 10/06, G01S 19/14, G06Q 10/10

(54) **SITE INSPECTION-BASED PRODUCT HISTORY MANAGEMENT METHOD**

(30) Priority: 20.07.2021 KR 20210095211; 10.08.2021 KR 20210105503
(71) Applicant: Park, Moon Kwan, Seoul 05206 (KR)
(72) Inventor: Park, Moon Kwan, Seoul 05206 (KR)
(74) Representative: Abel & Imray LLP
(86) International application number: PCT/KR2022/009250
(87) International publication number: WO 2023/003198

(57) **Abstract**

A site inspection-based product history management method is disclosed. The method comprises: an origin information providing step in which a mobile terminal of a user who has visited a production base transmits product information and production base information to a management server; a code assignment step in which the management server assigns a unique product code to the product identified through received product information; and a history creation step in which the management server maps and registers the product code to the product information and the production base information.

## Description

### Technical Field

The present disclosure relates to a method for product history management.

### Background Art

A food history management system is a system to enable tracing and managing the history of a food product. This system records and manages the history trace information at each stage ranging from the stage of manufacturing and processing food to the stage of sales and provides the information to consumers. Thanks to this system, consumers' right to know is guaranteed for choosing safe food and it is possible to rapidly block food distribution and take measures to recall food when problems such as food safety occur. However, problems with a place-of-origin label being manipulated frequently occur, such as Chinese Kimchi being disguised as a domestic product. In other words, the reliability of a product history trace is bound to decrease due to the possibility of manipulation related to the production area of the product. Meanwhile, Korea Patent Application Publication No. 10-2010-0096510 discloses a system to enable systematical management of the product by managing the entire process of production, sales, and consumption as one system.

### Disclosure

### Technical Problem

An objective of the present disclosure is to provide a method for enabling a reliable product history trace management.

### Technical Solution

A site inspection-based product history management method according to an exemplary embodiment may include an origin information providing step in which a mobile terminal of a user who visits a production base for an on-site inspection transmits product information and production base information to a management server, a code assignment step in which the management server assigns a unique product code to the product identified through the received product information, and a history creation step in which the management server maps and registers the product code, the product information, and the production base information.

### Advantageous Effects

According to the present disclosure, there is an effect to providing reliable history information to a requestor, such as a user or consumer who plans to purchase or has already purchased a product since product history information is registered and updated on the basis of on-site inspection by the user.

### Description of Drawings

FIG. 1 is a block diagram of a site inspection-based product history management system according to an exemplary embodiment of the present disclosure.
FIG. 2 is a block diagram of a mobile terminal and a management server according to an exemplary embodiment of the present disclosure.
FIG. 3 is a process flowchart of a mobile terminal for a site inspection-based product history management according to an exemplary embodiment of the present disclosure.
FIG. 4 is a detailed flowchart of S110 according to an exemplary embodiment of the present disclosure.
FIG. 5 is a detailed flowchart of S120 according to an exemplary embodiment of the present disclosure.
FIG. 6 is a process flowchart of a management server for a site inspection-based product history management according to an exemplary embodiment of the present disclosure.

### Mode for Invention

The above-described and additional exemplary embodiments of the present disclosure will become more apparent through the preferred exemplary embodiments described with reference to the accompanying drawings. Hereinafter, the present disclosure will be described in detail so that those skilled in the art may easily understand and reproduce the present disclosure through such exemplary embodiments.

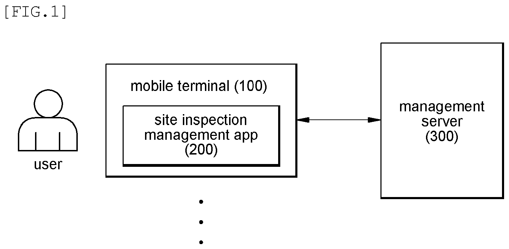

FIG. 1 is a block diagram of a site inspection-based product history management system according to an exemplary embodiment of the present disclosure. A mobile terminal 100 may be a communication-enabled computing device carried by a user, and may include a smartphone as an example. In the mobile terminal 100, an application 200 for a site inspection-based product history management (hereinafter referred to as "an site inspection management app") may be installed and executed. Herein, the user may refer to a person who visits a site such as a production base and a logistics base and conducts an on-site inspection in order to manage a product history. A single user may visit all sites and conduct an on-site inspection, or two or more users may be assigned sites to visit and conduct on-site inspections. For reference, a logistics base may be a base only for product distribution or may be a base in which the processing of products is also performed together.

A management server 300 may be a server system that includes one or more computing devices for servers and may operate under a variety of operating systems, including but not limited to Windows-based operating systems, MacOS, Java, UNIX, or LINUX. The management server 300 may communicate data with the mobile terminal 100 to manage the product history and specifically may interoperate with the site inspection management app 200 to manage the product history.

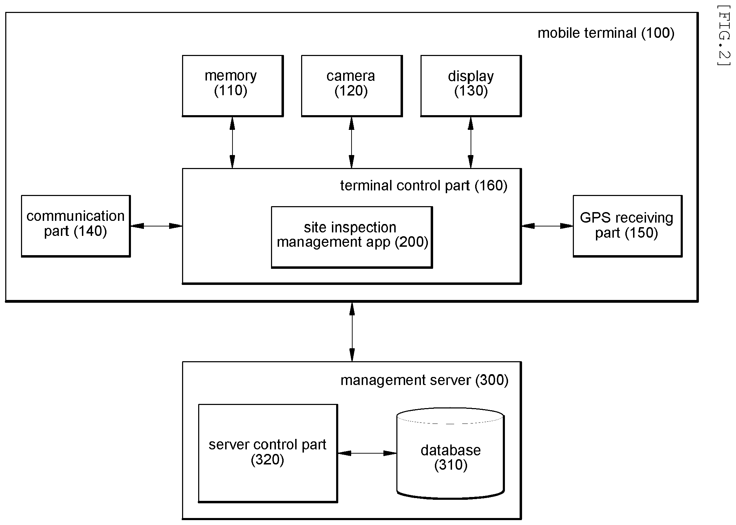

FIG. 2 is a block diagram of a mobile terminal and a management server according to an exemplary embodiment of the present disclosure. The mobile terminal 100 may include at least some of a memory 110, a camera 120, a display 130, a communication part 140, a GPS receiving part 150, and a terminal control part 160. The memory 110 may store data and programs for operating the mobile terminal 100, and the site inspection management app 200 may also be recorded and managed in the form of a program code. The camera 120 may be used for photographing a visual code such as a barcode or a QR code. The display 130 may be configured to enable the user to use the site inspection management app 200 and may be formed as an one integrated with a touch panel, thereby enabling input from the user as well as output to the user. The communication part 140 may be a transceiver used to transmit and receive data with the management server 300, and the GPS receiving part 150 may be a receiver that receives a GPS signal from a global positioning system (GPS) satellite.

The terminal control part 160 may be for controlling the overall operations of the mobile terminal 100, and may include one or more processors. The terminal control part 160 may load and execute the site inspection management app 200 stored in the memory 110 and accordingly the site inspection management app 200 may perform a process for the site inspection-based product history management. Herein, the site inspection management app 200 may be granted limited access to specific hardware and/or software resources that are configured in the mobile terminal 100. For example, basically, the site inspection management app 200 may be not permitted to access the GPS receiving part 150 but may be permitted to access the GPS receiving part 150 only when the visual code such as the barcode or QR code is scanned.

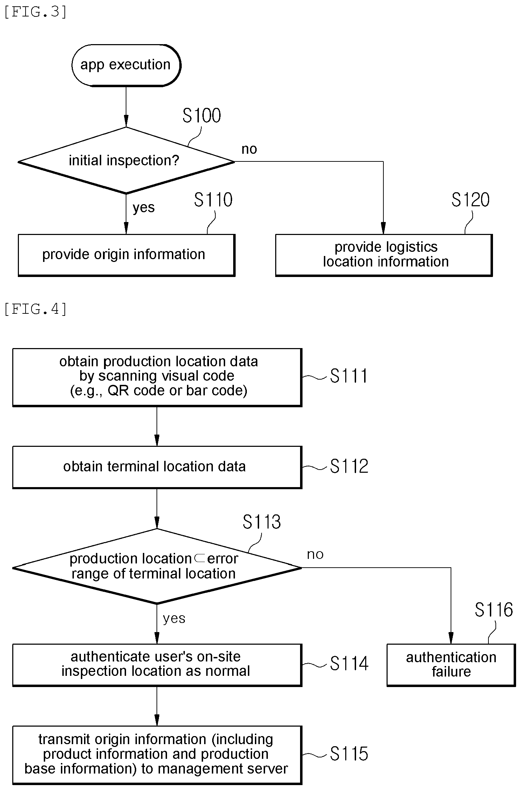

The management server 300 may include a database 310 and a server control part 320, and may also include all essential basic components of a server such as a communication module, although not shown in FIG. 2. History information for each product is stored and managed in the database 310. In addition, the server control part 320 may be configured to include at least one or more processors in hardware, and may perform a process for the site inspection-based product history management while interoperating with the site inspection management app 200. This will be described with reference to FIGS. 3 to 6.

FIG. 3 is a process flowchart of a mobile terminal for a site inspection-based product history management according to an exemplary embodiment of the present disclosure. First, the user (the person in charge of an on-site inspection) may visit the production base or the logistics base and verify in person the production base (the place of origin, the place of production) or logistics base (logistics location) of the product. That is, the user may visit the site and conduct the on-site inspection in order to ensure the reliability of the history trace of the product, and the site inspection management app 200 of the mobile terminal 100 may perform S110 or S120 while the user is located on the site. In one exemplary embodiment, the site inspection management app 200 may ask the user to verify whether it is an initial inspection through the display 130 or the like S100 and perform S110 or S120 depending on the verified result. Herein, the initial inspection may refer to a first inspection of the same product and refer to the on-site inspection conducted by visiting in person the place of origin which is the production base. And Non-initial inspection may refer to the on-site inspection on the product that has been distributed, and refer to the on-site inspection conducted by visiting the logistics location which is the logistics base. That is, S100 may be a step of asking and verifying whether the site for the user to visit for the on-site inspection is the production base or the logistics base.

When verified as the initial inspection in S100, the site inspection management app 200 may consider the user to visit the place of origin and to conduct the on-site inspection and then may perform the origin information providing step S110 that transmits the origin information to the management server 300, and when verified as the non-initial inspection in S100, the site inspection management app may consider the user to visit the logistics location and conduct the on-site inspection and then may perform the logistics location information providing step S120 that transmits logistics location information to the management server 300. The origin information that is transmitted to the management server 300 through the origin information providing step S110 may include product information and production base information. The product information may include a product name, and the production base information may include origin location data (production location data). Herein, the product information may be input from the user. Alternatively, the product information may be obtained together with the production base information. In addition, the logistics location information that is transmitted to the management server 300 through the logistics location information providing step S120 may include a product code and logistics base information. The product code is a unique code assigned to the product, and the logistics base information may include logistics location name and/or logistics locations data. Herein, the product code may be input from the user.

FIG. 4 is a detailed flowchart of S110 according to an exemplary embodiment of the present disclosure. First, the site inspection management app 200 may obtain the production location data by scanning the visual code (e.g., QR code) captured with the camera 120 according to the user's operation S111. Herein, the visual code may be prepared in advance at the production base and may be provided on a wall within the production factory (printed or attached in the form of a sticker or the like) or may be provided on fixed equipment essential for producing the product. Such a visual code may contain the production location data indicating the location of the production base in order to authenticate the place of origin of the product, wherein the production location data may be location coordinate data indicating latitude and longitude.

The site inspection management app 200 may obtain location data of the mobile terminal 100 S112. The site inspection management app 200 may obtain GPS location data using the GPS receiving part 150 in S112. That is, terminal location data obtained in S112 may be the GPS location data. In one exemplary embodiment, the site inspection management app 200 may access the GPS receiving part 150 and obtain GPS location data only when the visual code is scanned. In this case, the GPS receiving part 150 may be in an active state or in an inactive state according to the user's settings and when in the inactive state, the site inspection management app 200 may temporarily switch the GPS receiving part 150 to an active state to obtain the GPS location data and then switch back to an inactive state. In addition, the site inspection management app 200 may have the authority to switch the GPS receiving part 150 to an active state only when the visual code is scanned, and such authority may be granted by the user in advance.

The site inspection management app 200 may compare the GPS location data obtained in S112 with the production location data obtained in S111 and determine whether the production location falls within the error range of the GPS location S113. When determined through S113 that the production location falls within the error range of the GPS location, the site inspection management app 200 may authenticate that the user has accurately visited the production site for the on-site inspection S114. That is, it may authenticate that the user's on-site inspection location is normal. Next, the site inspection management app 200 may transmit the origin information to the management server 300 S115. The origin information may include the product information (e.g., a product name) and the production base information.

In one exemplary embodiment, the site inspection management app 200 may request the user to enter a product name when S114 is performed and receive the input. In another exemplary embodiment, the site inspection management app 200 may obtain not only the production location data but also the product name in S111. That is, the visual code may be scanned and both the production location data and the product information may be obtained therefrom. In addition, the production base information may include the production location data obtained in Sill or the terminal location data obtained in S112, or may include both. In addition, the origin information may also include information on the on-site inspection time, and the on-site inspection time may be the time when the location of the user's on-site inspection is authenticated as normal through S114.

Additionally, the site inspection management app 200 may transmit a unique identifier for identifying the user to the management server 300 along with the origin information in S115. Herein, the unique identifier may be an identifier (terminal ID) uniquely assigned to the mobile terminal 100. Meanwhile, when it is determined that the production location is out of the error range of the GPS location in S113, the site inspection management app 200 may process the authentication as failed S116. In this case, the site inspection management app 200 may report the fact of authentication failure to the management server 300.

According to the above, the user's on-site inspection visit may be accurately checked because the authentication is bound to fail when the visual code for the authentication of the place of origin is provided in a place other than the production base. In addition, the use of a GPS resource of the mobile terminal 100 may be minimized because there is no need to build a short-range communication resource such as a beacon and there is no need to continuously track the GPS location.

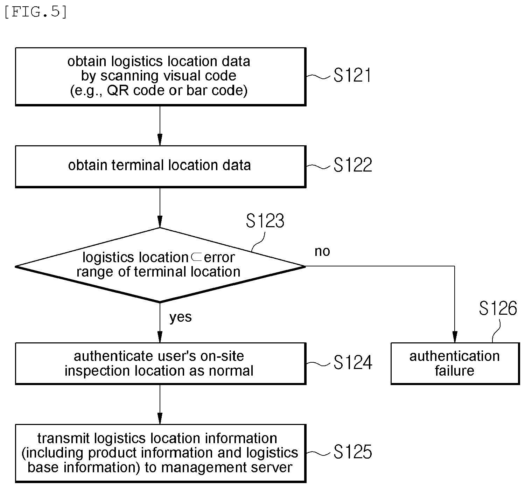

FIG. 5 is a detailed flowchart of S120 according to an exemplary embodiment of the present disclosure. First, the site inspection management app 200 may obtain the production location data by scanning the visual code (e.g., QR code) captured with the camera 120 according to the user's operation S111. Herein, the visual code may be prepared in advance at the logistics base and the visual code may contain the logistics location data indicating the location of the logistics base, which may also be location coordinate data indicating latitude and longitude.

The site inspection management app 200 may obtain the location data of the mobile terminal 100 S112. The site inspection management app 200 may obtain the GPS location data using the GPS receiving part 150 in S112. That is, the terminal location data obtained in S112 may be the GPS location data. In one exemplary embodiment, the site inspection management app 200 may access the GPS receiving part 150 and obtain the GPS location data only when the visual code is scanned. In this case, the GPS receiving part 150 may be in an active state or in an inactive state according to the user's settings, and when in the inactive state, the site inspection management app 200 may temporarily switch the GPS receiving part 150 to an active state to obtain the GPS location data and then switch back to an inactive state.

The site inspection management app 200 may compare the GPS location data obtained in S122 with the logistics location data obtained in S121 and determine whether the logistics location falls within the error range of the GPS location S123. When determined through S123 that the logistics location falls within the error range of the GPS location, the site inspection management app 200 may authenticate that the user has accurately visited the logistics site for the on-site inspection S124. When the authentication is successful, the site inspection management app 200 may transmit the logistics location information to the management server 300 S125. The logistics location information may include the product code and the logistics base information, wherein the logistics base information may include the logistics location data obtained at S121 and/or the terminal location data obtained at S122. The logistics location information may also include information on the on-site inspection time, wherein the on-site inspection time may be the time when the location of the user's on-site inspection is authenticated as normal through S124.

The product code included in the logistics location information may refer to a unique code such as a serial number assigned in order to identify the product and may be input from the user. For example, the site inspection management app 200 may request and receive the product code from the user when the location of the user's on-site inspection is authenticated as normal. For another example, the product code may be printed on the product in the form of a barcode, or the like, and it is possible for the site inspection management app 200 to obtain the product code by scanning the barcode after S214 is performed. When such a product code is input or is obtained in this way, the site inspection management app 200 may transmit the logistics location information to the management server 300. Meanwhile, when it is determined that the production location is out of the error range of the GPS location in S123, the site inspection management app 200 may process the authentication as failed S126. In this case, the site inspection management app 200 may report the fact of authentication failure to the management server 300.

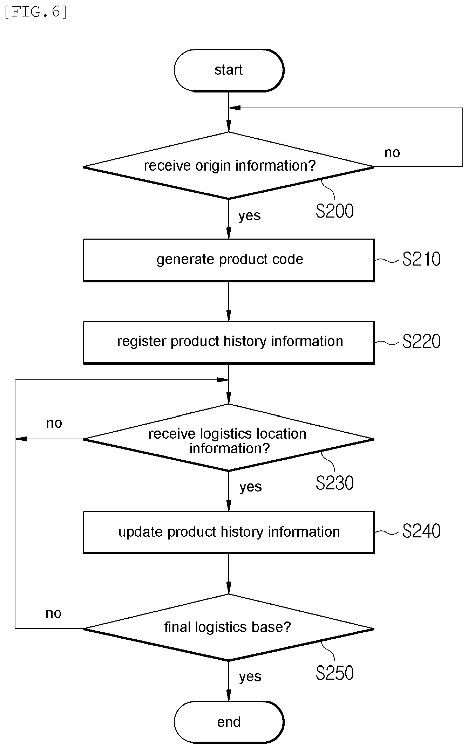

FIG. 6 is a process flowchart of a management server for a site inspection-based product history management according to an exemplary embodiment of the present disclosure. The server control part 320 of the management server 300 may receive base information from the mobile terminal 100. The base information may be the origin information or the logistics location information. Since the product code does not exist in the origin information and the product code exists in the logistics location information, it is possible to easily determine whether the received base information is the origin information or the logistics location information. When receiving the origin information, the server control part 320 may generate a unique product code to be assigned to the corresponding product S200 and S210. The generated product code may be transmitted to the site inspection management app 200 of the corresponding user and may be provided by the user to a manager of the place of origin for utilization. For example, the user or the manager of the place of origin may attach the product code to the product in the form of a sticker or the like, so that the product code may be used for history management.

The server control part 320 may map the generated product code and the received origin information and register it as the product history information in the database 310 S220. In this case, when the production base information included in the origin information is the location data, the server control part 320 may convert the corresponding location data into a place name information of the corresponding location and then register the information in the database 310. That is, the location data of the production base information may be converted into the name of the place of origin and registered in the database 310.

Thereafter, when receiving the logistics location information, the server control part 320 may update the corresponding product history information registered in the database 310 with the received logistics location information S230 and S240. Specifically, the server control part 320 may search the database 310 for the corresponding product history information with the product code of the received logistics location information and additionally register the remaining information included in the logistics location information to the searched product history information. In this case, when the logistics base information included in the logistics location information is the location data, the server control part 320 may convert the logistics base information into the place name information of the corresponding location and then additionally register the information. That is, the location data of the logistics base information is converted into the name of the logistics location and additionally registered.

Next, the server control part 320 may check whether the logistics base that the user visits for an on-site inspection is the final logistics base S250. Information on the final logistics base may be registered in the database in advance to be managed and accordingly, the server control part 320 may identify the logistics base information included in the logistics location information received from the mobile terminal 100 and determine whether the identified logistics base is the final logistics base. When it is not the final logistics base, the above-described S230 and S240 are repeated until the product is transported to the final logistics base.

In one exemplary embodiment, when receiving the unique identifier (e.g., terminal ID) along with the origin information from the mobile terminal 100, the server control part 320 may authenticate the user with the received unique identifier and perform S210 only when the authentication is successful. That is, the product history information is registered after verifying that the user is assigned an on-site inspection right for the corresponding base. In addition, the server control part 320 may determine whether to perform S240 by performing a user authentication procedure even when the unique identifier is received along with the logistics location information from the mobile terminal 100.

Meanwhile, a consumer or the like may look up the history of the product recorded in the database 310 with the product code online and check its place of origin and distribution route.

So far, the present disclosure has been described focusing on its preferred exemplary embodiments. Those skilled in the art to which the present disclosure pertains will understand that the present disclosure may be implemented in a modified form without departing from the essential characteristics of the present disclosure. Therefore, the disclosed embodiments should be considered from an illustrative rather than a restrictive perspective. The scope of the present disclosure is indicated in the claims rather than the foregoing description, and all differences within the equivalent scope should be construed as being included in the present disclosure.

## Claims

1. A site inspection-based product history management method, the method comprising:
an origin information providing step in which a mobile terminal of a user visiting a production base for an on-site inspection transmits a product information and a production base information to a management server;
a code assignment step in which the management server assigns a unique product code to a product identified through the received product information; and
a history creation step in which the management server maps and registers the product code, the product information, and the production base information.

2. The site inspection-based product history management method of claim 1, wherein the origin information providing step comprises:
a step of obtaining a production location data from a code data gained by scanning a visual code provided in the production base;
a step of obtaining a location data of the mobile terminal;
a step of determining whether a production location falls within an error range of a terminal location by comparing the production location data with the terminal location data; and
a step of transmitting the product information and the production base information to the management server when it is authenticated that the user visits the production base for an on-site inspection in order to manage a product history when the production location falls within the error range of the terminal location as a result of the determination.

3. The site inspection-based product history management method of claim 2, wherein the step of obtaining the terminal location data is automatically performed when the production location data is obtained.

4. The site inspection-based product history management method of claim 1, further comprising:
a logistics location information providing step in which the mobile terminal of the user who visits a logistics base for the on-site inspection transmits the product code and a logistics base information to the management server; and
a history update step in which the management server maps and additionally registers a logistics location information identified through the received logistics base information to the corresponding product code.

5. The site inspection-based product history management method of claim 4, the method comprising:
a step of obtaining a logistics location data from a code data gained by scanning the visual code provided in the logistics base;
a step of obtaining a location data of the mobile terminal when the logistics location data is obtained;
a step of determining whether a logistics location falls within an error range of a terminal location by comparing the logistics location data with the terminal location data; and
a step of transmitting the product code and the logistics base information to the management server when the user's visit for the on-site inspection is authenticated when the logistics location falls within the error range of the terminal location as a result of the determination.

6. The site inspection-based product history management method of claim 5, wherein the logistics location information providing step and the history update step are repeatedly performed whenever the user's visit for the on-site inspection is performed for each logistics base.

7. The site inspection-based product history management method of claim 4, further comprising:
a step in which the mobile terminal asks and checks the user whether a visited place for the on-site inspection is the production base or the logistics base,
wherein the origin information providing step is performed when the visited place for the on-site inspection is the production base, and the logistics location information providing step is performed when the visited place is a logistics base as a result of the asking and responding.
